**Europäisches Patentamt**

**European Patent Office**

**Office européen des brevets**

(19)

(11) Publication number: **0 103 336**
**A2**

# (12) EUROPEAN PATENT APPLICATION

(21) Application number: **83201281.9**

(22) Date of filing: **06.09.83**

(51) Int. Cl.³: **G 06 F 11/00**

(30) Priority: **13.09.82 US 417370**

(43) Date of publication of application: **21.03.84**
**Bulletin 84/12**

(84) Designated Contracting States: **BE DE FR GB IT NL SE**

(71) Applicant: **ITALTEL SOCIETA' ITALIANA TELECOMUNICAZIONI spa, P.le Zavattari, 12, I-20149 Milano (IT)**

(72) Inventor: **Israel, John W., 3611 Dartmouth Avenue, Dallas Texas 25205 (US)**

(74) Representative: **Coggi, Giorgio, ITALTEL Società Italiana Telecomunicazioni s.p.a. (Servizio Brevetti) Via A. di Tocqueville 13, I-20154 Milano (IT)**

(54) Circuital arrangement adapted to generate alarm criteria in response to the error detection in messages exchanged between a pair of functional units.

(57) The transmitting section of each functional unit is equipped with means which are designed to compute the cyclic redundancy bits on the ground of the logic value of the information bits of each message and is further adapted to send the information bits, together with the associated cyclic redundancy bits, to the receiving section of the communicating functional unit (FU) by way of a control unit (CB). The receiving section of said functional units is equipped with means adapted to compute the cyclic redundancy bits on the ground of the received messages and to send them to the control unit. This unit is designed to compute the cyclic redundancy bits on the ground of the information bits of the message in transit, to compare them with the cyclic redundance bits extracted from the message emitted by the said transmitting section as well as to generate a first alarm criterion (A₁) in case it detects the non-identity in the compared quantities.

The control unit is further adapted to compute the cyclic redundancy bits and to compare them with the cyclic redundancy bits computed by the receiving section; should said control unit detect non-identity in the compared quantities, it generates a second alarm criterion (A₂)

0103336

"CIRCUITAL ARRANGEMENT ADAPTED TO GENERATE ALARM CRITERIA IN RESPONSE TO THE ERROR DETECTION IN MESSAGES EXCHANGED BETWEEN A PAIR OF FUNC-TIONAL UNITS".

The present invention relates to a circuital arrangement adapted to detect the presence of errors in the message exchanged between a pair of transceiving functional units and to generate alarm criteria when detection gives a positive result signalling that the error is to be ascribed to the transmitting unit or to the receiving unit.

Prior art comprises circuital arrangements designed to detect the presence of errors in the message exchanged between a pair of functional units which provide the presence of means, disposed in the transmitting sections, and adapted to associate a prefixed number of cyclic redundance bits with the bits of each message destined to be transmitted, the said cyclic redundance bits being computed according to a predetermined polynomial arrangement.

The said known arrangements further comprise means which are disposed in the receiving sections and are designed to detect the presence of errors in the received message through the test of the redundance bits; should said test detect the presence of errors, an alarm criterion is generated. In case of malfunction, a similar circuital arrangement presents a drawback, since it is adapted to generate an alarm criterion without being able to give any information about the unit affected by said malfunction, the localization of the fault results to be therefore difficult.

Purpose of the present invention is to provide a circuital arrangement able to detect the presence of errors and to also inform whether the malfunction is to be ascribed to the transmitting section or to the receiving section.

Another aim is that to perform such a detection without causing delays in the transit time of the signals exchanged between said pair of units.

Accordingly, the object of the present invention consists of a circuital arrangement wherein the transmitting section of each functional unit is equipped with means designed to compute the cyclic redundance bits on the ground of the information bits of each message according to a prefixed polynomial arrangement, and further adapted to send the information bits, together with the associated cyclic redundance bits, to the receiving section of the communicating functional units by means of a control unit. The receiving section of said functional units comprises means designed to compute the cyclic redundance bits on the ground of the received messages and to send them to the control unit. This unit is adapted to compute the cyclic redundance bits on the ground of the information bits in transit, to compare them with the cyclic redundance bits extracted from the message emitted by said transmitting section and to generate a first alarm criterion in case of non-identity in the compared quantities.

The control unit further computes the cyclic redundance bits, compares them with the cyclic redundance bits computed by the receiving section and generates a second alarm criterion, if non-identity in the compared quantities is detected.

The activation of the first alarm criterion and of the second alarm criterion therefore indicates a malfunction in the transmitting section and in the receiving section of said functional units. Both the control unit and the transmitting and receiving section of said functional units are so arranged as to generate the cyclic redundance bits without causing any delay on the messages in conformity with the above mentioned purpose.

Further characteristics of the solution will appear from the following description of a non-limiting embodiment and with reference to the attached drawings in which:

- figure 1 shows the connection of the control unit to a given pair of functional units;

- figure 2 shows in detail the control unit CB of figure 1;

- figure 3 shows in detail the transceiving circuits of the functional units of figure 1, according to the invention;

- figure 4 is another version of figure 1, in the assumption that $FU_1$ is formed by a processing unit communicating with a plurality of peripheral units $FU_2$.

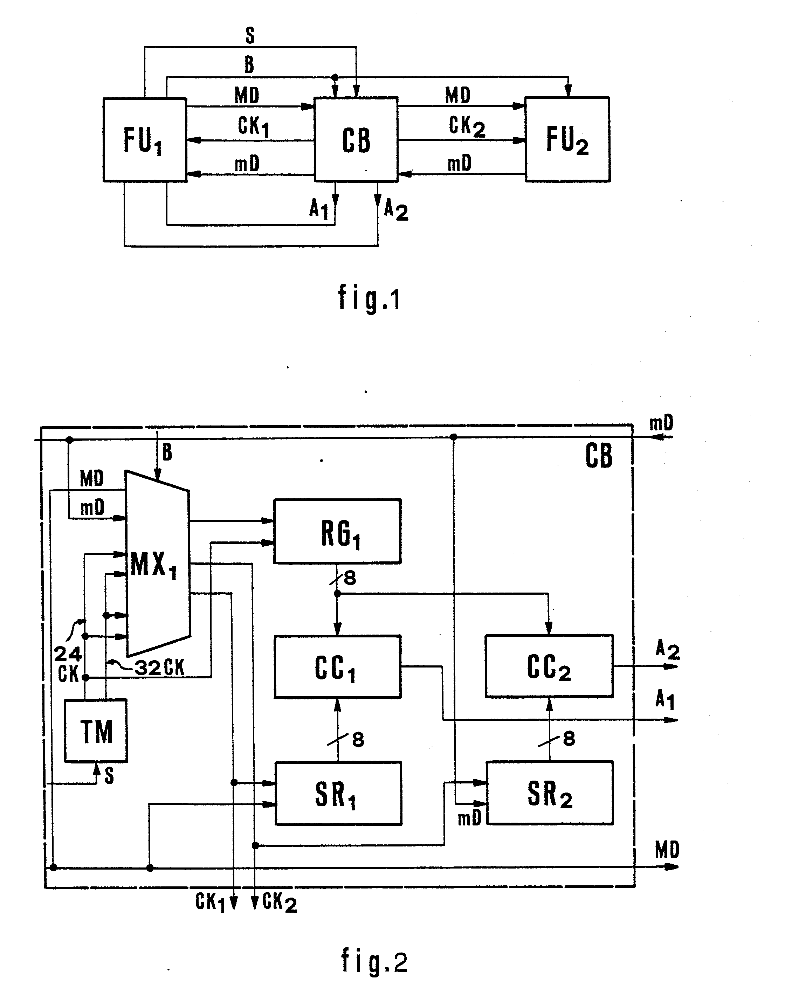

In figure 1, $FU_1$ and $FU_2$ are used to indicate a pair of functional units, e.g. consisting of either a pair of processing units or a processing unit and a peripheral unit, which are designed to exchange messages comprising 24 information bits and 8 cyclic redundancy bits.

The message transmission from unit $FU_1$ to unit $FU_2$ is performed serially by means of a wire indicated with MD, while the exchange of messages in the opposite direction is performed in a similar way by means of a wire indicated with mD.

Let us assume that unit $FU_1$ is formed by a processing unit and that unit $FU_2$ is formed by a peripheral unit of $FU_1$; in this case a transfer cycle of a message is initiated by unit $FU_1$ which generates a signal S which is received by a timing unit provided in a control unit CB. This unit also receives from unit $FU_1$ a signal B whose logic level indicates the transmission way of the message, and supplies the transmitting unit with a sequence of 32 timing impulses while supplying the receiving unit with a sequence of 24 timing impulses.

In the assumption that during the current cycle signal B provides such a polarity as to characterize unit $FU_1$ as a transmitting unit, said unit $FU_1$ receives 32 timing impulses by means of a wire indicated with $CK_1$ and sends the 32 bits of the message to unit CB by means of wire MD.

Unit CB is adapted to extract from the message received at its input the 8 cyclic redundancy bits computed by unit $FU_1$ and is further adapted to compute the cyclic redundance on the ground of the 24 information bits of the message passing through it.

A first comparison circuit allocated in unit CB is adapted to

0103336

generate a first alarm criterion $A_1$, in case it detects the non-identity between the cyclic redundance bits computed by $FU_1$ and those computed by unit CB, thus signalling the presence of a malfunction in unit $FU_1$.

At the same time, the message generated by unit $FU_1$ reaches unit $FU_2$ which is equipped with means designed to compute 8 redundance bits on the ground of the 24 information bits of the message received at its input, said means being further adapted to transfer said bits to unit CB.

A second comparison circuit allocated in unit CB is designed to generate a second alarm criterion $A_2$, in case it detects the non-identity between the cyclic redundance bits computed by unit $FU_2$ and those computed on the message in transit, thus signalling the presence of a malfunction in unit $FU_2$.

Figure 2 is a detailed diagram of unit CB according to figure 1, which provides the presence of a timing unit TM; in response to the reception of said signal S, the said unit provides at its first output the sequence 24 CK of timing impulses and at its second output the sequence 32 CK.

The input of unit CB further receives said signal B which reaches the control input of a first multiplexer $MX_1$ comprising three sections.

The first section is connected to the outputs MD and mD of units $FU_1$ and $FU_2$, the second section is connected to the outputs 24 CK and 32 CK of unit TM, while the third section is connected to the same outputs of unit TM, said outputs having their position reversed with respect to that of the second section. The output $CK_1$ of the third section is designed to send the timing impulses to unit $FU_1$, while the output $CK_2$ of the second section is designed to send the timing impulses to unit $FU_2$.

If unit $FU_1$ must transmit a message to unit $FU_2$, signal B will provide such a level that unit $MX_1$ renders available at the output of the first section the messages present on wire MD, whereas at the output of the second and third section it renders available the sequence of impulses 24 CK and 32 CK, respectively.

In response to the reception of the impulse sequence 32 CK, unit $FU_1$ sends the 32 bits of a message on wire MD; such bits are sent to unit $FU_2$ simultaneously reaching the output of unit $MX_1$, to which there is connected a cyclic redundance generator $RG_1$.

The input of unit $RG_1$ receives the impulses 24 CK so that is provides for computing 8 cyclic redundance bits on the ground of the 24 information bits emitted by unit $FU_1$ and applies them to the first input of a comparison circuit $CC_1$.

Wire MD also reaches the input of a first shift register $SR_1$ providing a capacity of 8 bits and its input receives a sequence of 32 timing impulses so that at the end of said sequence it has stored the 8 cyclic redundance bits computed by unit $FU_1$ and applies them to the second input of unit $CC_1$. This unit is arranged to activate its output $A_1$ when it detects the non-identity of the signals available at its inputs.

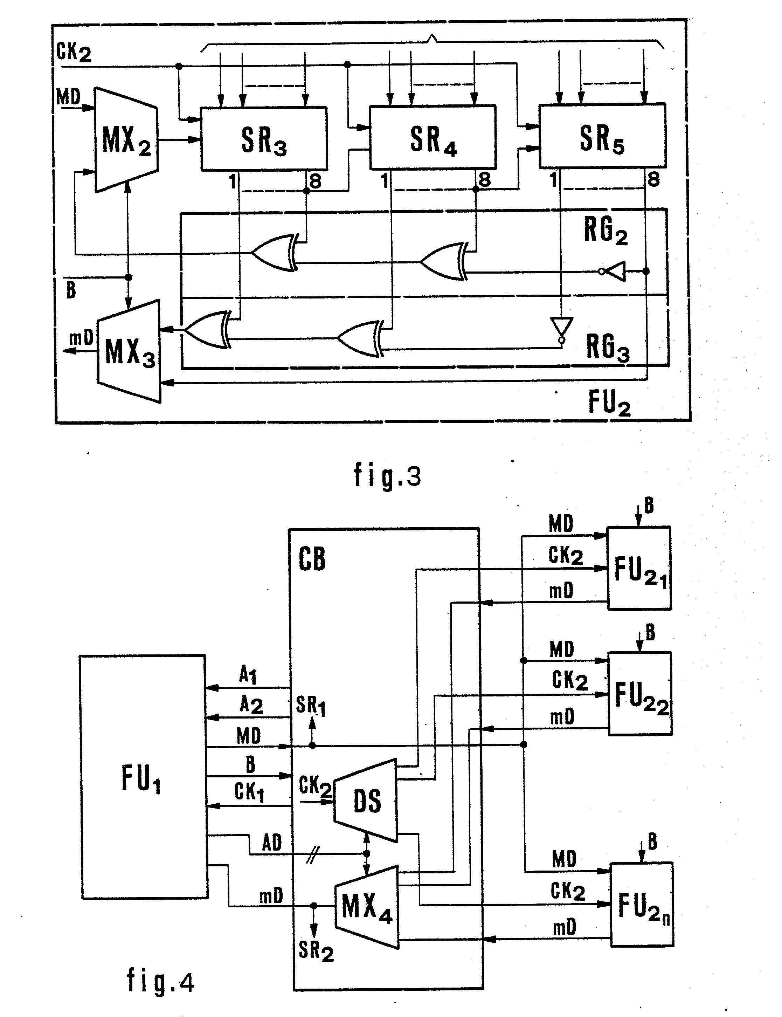

Unit $FU_2$ receives the 32 bits of the message together with the sequence 24 CK and starting from the 17th impulse of said sequence, computes the 8 cyclic redundance bits, as it will be described below with reference to figure 3, and sends this sequence to unit CB by means of wire mD. Unit CB comprises a second shift register $SR_2$, whose input receives the data available on wire mD, as well as said sequence 24 CK, so that during the first 16 timing impulses it stores bits providing a random value, while from the 17th to the 24th impulse it stores the cyclic redundance bits computed by unit $FU_2$.

The outputs of unit $SR_2$ are applied to the first input of the second comparison circuit $CC_2$, whose second input receives the outputs of unit $RG_1$ and generates an alarm criterion $A_2$, if it detects the non-identity of the quantities available at its inputs, thus signalling the presence of malfunctions in unit $FU_2$.

Figure 3 illustrates the elements of unit $FU_2$ relevant to the invention. Said elements are not described in detail, since unit $FU_1$ can

utilize elements similar to those of unit $FU_2$, as specified in the following description.

Unit $FU_2$ provides the presence of a register which is used to store both the input data and the output data and consists in fact of three shift registers $SR_3$, $SR_4$ and $SR_5$, each providing a storage capacity of 8 bits with both serial and parallel load input.

The serial load input of register $SR_3$ is connected to the output of a multiplexer $MX_2$, whose first input receives wire MD and whose second input receives the output of a cyclic redundance generator $RG_2$.

Unit $FU_2$ receives said signal B which is applied to both the control input of unit $MX_2$ and the control input of an additional multiplexer $MX_3$, the first input of which receives the output of a third cyclic redundance generator $RG_3$ and the second input of which receives the output of register $SR_5$.

When unit $FU_2$ must receive messages from unit $FU_1$, signal B provides such a level that the output of $MX_2$ generates the bits available on wire MD, while $MX_3$ emits on wire mD the bits available at the output of unit $RG_3$ and the input-output register receives the sequence of impulses 24 CK, which determine the serial storage of the information bits generated by unit $FU_1$.

During the first 16 impulses of sequence 24 CK, unit $RG_3$ sends bits providing a random value on wire mD, while during the 8 bits of said sequence it generates as many cyclic redundance bits computed on the ground of the received bits and such a redundance is sent to register $SR_2$ by unit CB.

In case the exchange of messages is performed in the opposite way, there is utilized the same register formed by units $SR_3$, $SR_4$ and $SR_5$ where the message to be sent to unit $FU_1$ is loaded in parallel.

In this case signal B provides such a level that multiplexer $MX_1$ of unit CB emits the sequence of impulses 32 CK on wire $CK_2$ and the outputs of multiplexers $MX_2$ and $MX_3$ respectively send the bits available at the output of unit $RG_2$ and those available at the output of register $SR_5$.

During the first 8 timing impulses of sequence 32 CK, unit $MX_3$ provides at its output the first 8 information bits of the message to be transmitted, which has been shifted in the register, thus emptying unit $SR_3$.

At the same time unit $RG_2$ has computed the 8 cyclic redundance bits and has transferred them into register $SR_3$ through unit $MX_2$.

The following 24 timing impulses of sequence 32 CK determine the transfer on wire mD of the remaining 16 information bits and of the 8 redundance bits, which had been previously stored in unit $SR_3$.

Figure 3 also illustrates an embodiment of units $RG_2$ and $RG_3$ which, in conformity with the above specified polynomial arrangement, consists of a first and a second exclusive OR and of an inverting circuit.

In case unit $FU_1$ is formed by a unit designed to communicate with only one of units $FU_2$, $FU_1$ can be realized as shown in figure 3; if on the contrary unit $FU_1$ must communicate with a plurality of units $FU_2$, as illustrated in figure 4, it is convenient to utilize a further register (non illustrated) which is formed by as many units $SR_3$, $SR_4$ and $SR_5$. A register is thus utilized to store the output data and it will be consequently connected to a unit similar to unit $RG_2$, while another register to be used for storing the input data will be consequently connected to a unit similar to unit $RG_3$.

The prevision of a double register is due to the need to not limit the operative speed by means of an element which is utilized both as an input and an output device when the functional unit must communicate with a plurality of units.

According to the aforesaid assumption that unit $FU_2$ represents one of the n units communicating with unit $FU_1$, figure 4 shows a connection diagram of said units in which there are displayed the additional devices that unit CB must provide in this case.

Unit $FU_1$ is connected to all units $FU_2$ through wire MD, but only unit $FU_2$, which is designed to exchange messages at the considered instant, receives a sequence of timing impulses through wires $CK_2$.

Wires $CK_2$ available at the output of unit $MX_1$ (figure 2) are applied to the input of a signal distributor DS which is addressed by a binary configuration emitted by unit $FU_1$ on wires AD.

In this way only unit $FU_{2i}$, which receives the timing impulses, is adapted to receive or transmit messages. Wires mD, through which units $FU_2$ transmit the messages towards unit $FU_1$, are applied to the input of a multiplexer $MX_4$ which is also addressed through wires MD.

Thus, only one of units $FU_2$ is adapted to send messages into register $SR_2$ and unit $FU_1$.

CLAIMS

1) A circuital arrangement adapted to emit alarm criteria in response to the error detection in the message exchanged between a pair of functional units, characterized by the fact that the transmitting section of each functional unit (FU) provides the presence of means adapted to compute $\underline{h}$ cyclic redundance bits on the ground of the $\underline{k}$ information bits of each message, according to a predetermined polynomial arrangement, by the fact that each message with the associated cyclic redundance bits is sent to the receiving section of the communicating functional unit by means of a control unit (CB), by the fact that the receiving section of said functional units (FU) is adapted to compute the cyclic redundance bits on the ground of the received messages and to transmit such redundance bits to the control unit (CB), by the fact that the control unit (CB) is adapted to compute the cyclic redundance bits on the ground of the information bits of the message passing through it, provides to compare them with the cyclic redundance bits extracted from the message emitted by the said transmitting section, and is further adapted to emit a first alarm criterion when it detects the non-identity between the compared quantities; it is further designed to compute the cyclic redundance bits and to compare them with the cyclic redundance bits computed by said receiving section as well as to emit a second alarm criterion when it detects the non-identity in the compared quantities.

2) A circuital arrangement as claimed in claim 1, characterized by the fact that the control unit provides the presence in combination of the following characteristic elements:
   - a timing unit (TM) adapted to be acticated in response to the reception of a first signal (S) emitted by one of the two functional units (FU), the first and the second output of said timing unit being designed to emit a sequence of $\underline{k}$ timing impulses (24 CK) and a

sequence of $\underline{k}$ + $\underline{h}$ timing impulses (32 CK), respectively;

- a first multiplexer ($MX_1$) whose address input receives a second signal (B) emitted by one of the two functional units and indicating the transmission way of each message, comprising a first section whose first input is applied to a first connection (MD) and whose second input is applied to a second connection (mD) which respectively receive data from the first and the second functional unit ($FU_1$) and ($FU_2$), and a second section whose first and second input are respectively applied to a first output (24 CK) and to a second output (32 CK) of the timing unit (TM), and a third section whose first and second input are respectively applied to the second output (32 CK) and to the first output (24 CK) of the timing unit (TM);

- a first cyclic redundance generator ($RG_1$) connected to the output of the first section of the said first multiplexer ($MX_1$);

- a first shift register ($SR_1$) providing a capacity of $\underline{h}$ bits, whose timing input is connected to the output of the third section of the first multiplexer ($MX_1$) and whose data input is applied to the said first connection (MD);

- a second shift register ($SR_2$) providing a capacity of $\underline{h}$ bits, whose timing input is connected to the output of the second section of the first multiplexer ($MX_1$) and whose data input is applied to said second connection wire (mD);

- a first comparison circuit ($CC_1$) adapted to generate an alarm criterion ($A_1$) when detecting the non-identity between the contents of the first shift register and the output of the said first cyclic redundance generator ($RG_1$);

- a second comparison circuit ($CC_2$) adapted to generate a second alarm criterion ($A_2$) when detecting the non-identity between the contents of the second shift register ($SR_2$) and the output of the said first cyclic redundance generator ($RG_1$).

3) A circuital arrangement as claimed in claim 1, characterized in that the transceiving section of each functional unit (FU) provides the presence in combination of the following characteristic elements:

- a third register ($SR_3$, $SR_4$ and $SR_5$) providing a storage capacity of $\underline{k}$ bits, whose timing input is connected to the output of the second section of the first multiplexer ($MX_1$), the said register also providing a serial load input and a parallel load input;

- a second multiplexer ($MX_2$) which is controlled by the said second signal (B) and whose first and second input are respectively applied to the said first connection (MD) and to the output of a second cyclic redundance generator ($RG_2$);

- the second cyclic redundance generator ($RG_2$) whose input receives prefixed outputs of the said third register;

- a third multiplexer ($MX_3$) which is controlled by the said second signal (B) and where a first input receives the serial output of the third register, while a second input receives the output of a third cyclic redundance generator ($RG_3$);

- a third cyclic redundance generator ($RG_3$) whose input receives prefixed outputs of the said third register.

4) A circuital arrangement as claimed in claim 1, wherein the first functional unit ($FU_1$) is formed by a single unit, while the second functional unit ($FU_2$) represents one of the $\underline{n}$ functional units communicating with the first functional unit ($FU_1$), characterized by the fact that the control unit (CB) further comprises a fourth multiplexer ($MX_4$) and a signal distributor (DS) whose address inputs receive a binary configuration (AD) relative to the indication of the second functional unit that, at the considered instant, is designed to exchan ge messages with the first functional unit, the fourth multiplexer ($MX_4$) being applied to the $\underline{n}$ second connections (mD) outgoing from the $\underline{n}$ second functional units ($FU_{2i}$,...,$FU_{2n}$) and the signal distributor (DS) being adapted to supply one of the $\underline{n}$ second functional units with the sequence of timing impulses which are available at the output ($CK_2$)

of the second section of the first multiplexer ($MX_1$).

5) A circuital arrangement as described above and as illustrated in the accompanying drawings as well as any part thereof either _per se_ or in combination.

fig.1

fig.2

fig.3

fig.4